# EUROPÄISCHE PATENTANMELDUNG

(11) **EP 2 261 675 A2**
(43) Veröffentlichungstag der Anmeldung: **15.12.2010**
(21) Anmeldenummer: 10010347.2
(22) Anmeldetag: 19.02.1999
(51) Int. Cl.: G01N 35/02

(54) **Analysesystem**

(30) Priorität: 20.02.1998 DE 19807177
(62) Teilanmeldung aus: 99908931.1
(71) Anmelder: Kabushiki Kaisha Hitachi Seisakusho (Hitachi, Ltd.), Chiyoda-ku, Tokyo 100-8280 (JP)
(72) Erfinder: Frank, Ulrich, 68519 Viernheim (DE)
(74) Vertreter: Schlimme, Wolfram

(57) **Zusammenfassung**

Ein Analysesystem, insbesondere für die medizinische Analytik zur Durchführung klinisch-chemischer und immunologischer Analysen, umfaßt ein Analysegerät und zumindest einen Systemreagenzienträger. Das Analysegerät umfaßt zumindest einen gesteuert drehbar antreibbaren Rotor, erste Aufnahmevorrichtungen für Reagenziengefäße, zweite Aufnahmevorrichtungen für Probengefäße, eine mit einer Pipettiervorrichtung versehene, gesteuert antreibbare und entlang einer Schwenkbahn zum Rotor hin und von diesem weg bewegbare Hub-/Schwenkeinrichtung, eine Waschstation für die Pipettiervorrichtung, eine Detektoreinrichtung und eine Steurerungseinrichung zur Steuerung des Antriebs des Rotors und des Antriebs der Hub-/Schwenkeinrichtung sowie zur Steuerung des Betriebs der Pipettiervorrichtung und der Detektoreinrichtung. Zumindest ein Probengefäß ist auf der Schwenkbahn der Pipettiervorrichtung plazierbar. Die ersten Aufnahmevorrichtungen sind in dem einen Reaktionsrotor bildenden Rotor vorgesehen und zur Aufnahme von Meßküvetten ausgebildet. Die Detektoreinrichtung ist im Bereich einer Winkelposition des Reaktionsrotors gelegen, so daß die Analyse in einer im Rotor befindlichen Meßküvette erfolgt. Der Systemreagenzienträger weist zumindest eine mit einem testspezifischen, vorformulierten, naßchemischen Systemreagenz vorbefüllte Küvette und auch die Meßküvette auf.

## Beschreibung

Die Erfindung betrifft ein Analysesystem, insbesondere für die medizinische Analytik zur Durchführung klinisch-chemischer und immunologischer Analysen.

Es sind naßchemische Analysesysteme bekannt, bei denen flüssige Reagenzien in Reagenzienbehältern vorgesehen sind, die in entsprechenden Aufnahmen eines drehbaren Reagenzienrotors aufgenommen sind. Des weiteren weisen diese bekannten naßchemischen Analysesysteme einen Probenrotor auf, in den die in entsprechenden Probenröhrchen enthaltenen Proben eingesetzt sind. Dem Reagenzienrotor ist ein Reagenzpipettor zugeordnet und dem Probenrotor ist ein Probenpipettor zugeordnet. Ein dritter Rotor, ein Reaktionsrotor, ist mit Reaktionsküvetten bestückt.

Diese bekannten naßchemischen Analysesysteme arbeiten wie folgt: Mit dem Reagenzpipettor wird ein analysespezifisches Reagenz aus den im Reagenzienrotor enthaltenen Reagenzienbehältern in einer vorbestimmten Menge entnommen und in eine Reaktionsküvette gefüllt, woraufhin der Probenpipettor eine vorgegebene Menge aus einer vorbestimmten Probe entnimmt und in die mit dem Reagenz befüllte Reaktionsküvette zuführt. Die auf diese Weise mit einem Reagenz und einer Probe beschickte Reaktionsküvette wird vom Reaktionsrotor zu einer Meßposition verfahren, wo beispielsweise eine fotometrische Messung der Reaktionslösung durchgeführt wird, die dann anhand von gespeicherten Vergleichswerten ausgewertet wird.

Derartige naßchemische Analysesysteme sind insbesondere für umfangreiche Versuchsreihen oder ein hohes Analyseaufkommen geeignet, wie es beispielsweise in Kliniklabors anfällt. Da die in den offenen Reagenziengefäßen im Reagenzienteller enthaltenen naßchemischen Reagenzien nur eine begrenzte Haltbarkeit aufweisen, kann eine derartiges naßchemisches Analysesystem nur dann betrieben werden, wenn eine bestimmte Mindestanzahl an Untersuchungen im System durchgeführt wird, da ansonsten ein zu häufiger Austausch von nicht aufgebrauchten, aber verfallenen Reagenzien erforderlich ist, der die Betriebskosten erhöht.

Als Alternative ist ein trockenchemisches Analysesystem bekannt, bei welchem Reagenzien im festen Zustand auf einem Trägermaterial aufgebracht sind. Diese Reagenzträger werden mit einer vorbestimmten Menge der Probe benetzt und der mit der Probe beaufschlagte Reagenzträger wird dann in einer Detektoreinrichtung untersucht, beispielsweise mittels einer fotometrischen Messung. Diese trockenchemischen Analysesysteme weisen jedoch den Nachteil auf, daß die Entwicklungskosten für die Reagenzträger sehr hoch sind und daß die Proben im Regelfall manuell auf den Reagenzträger aufzubringen sind, so daß sich diese Analysesysteme nur für Einzelmessungen oder Messungen mit geringen Probenzahlen beziehungsweise Testzahlen eignen.

Aus der DE 33 18 573 Al ist ein Analysegerät bekannt, bei dem zwei konzentrisch drehbare Rotoren, nämlich ein innerer Rotor für Probenküvetten und ein äußerer Rotor für Meßküvetten, vorgesehen sind, die unabhängig voneinander drehbar sind. Weiterhin ist dort ein schwenkbarer Arbeitsarm vorgesehen, der an seinem freien Ende mit einer Pipette versehen ist. Die Schwenkbahn der Pipette kreuzt die beiden Rotoren, sodaß jeweils eine Meßküvette des äußeren Rotors und eine Probenküvette des inneren Rotors in der Schwenkbahn der Pipette liegen. Weiterhin sind auf der Schwenkbahn der Pipette, außerhalb des äußeren Rotors, eine Meßstation, Reagenzienflaschen und eine Vorrichtung zum Trocknen der Pipette sowie gegebenenfalls eine Reinigungsstation für die Pipette vorgesehen.

Diese bekannte Vorrichtung arbeitet wie folgt:
Der Arm mit der Pipettiervorrichtung wird über eine im inneren Rotor befindliche Probenküvette geschwenkt, die Pipettenspitze wird in die Probe eingetaucht und die Probe wird in die Pipette angesaugt. Der Arm verschwenkt dann vom inneren Rotor zum äußeren Rotor über eine Meßküvette und lädt die Probe in der Meßküvette ab. Danach wird die Meßküvette von einem am Arm befindlichen Greifer erfaßt, zusammen mit dem Arm angehoben, aus dem Rotor entnommen und über die stationäre Meßstation geschwenkt, woraufhin die Meßküvette in die Meßstation abgesenkt und vom Greifer gelöst wird. Danach vollführt der Arm noch eine oder mehrere Hin- und Herbewegungen und holt, gegebenenfalls nach vorheriger Reinigung der Pipette, ein Reagenz oder mehrere Reagenzien aus den stationär angebrachten Reagenzienflaschen, die dann jeweils in die in der Meßstation befindliche Meßküvette eingespritzt werden. Nach erfolgter Messung wird die Meßküvette vom Arm wieder auf ihre Position im äußeren Rotor zurückversetzt.

Nachteilig ist bei dieser bekannten Vorrichtung, daß die Meßküvetten vom Arm aus dem Rotor heraus und wieder zurück transportiert werden müssen, was es erforderlich macht, den Arm mit einem Greifer zu versehen, wodurch die Armkonstruktion komplex wird. Des weiteren erfordert der Transport der Meßküvette vom äußeren Rotor zur Meßstation mittels des Arms eine gewisse Zeit, während der das Analysegerät nicht für seine eigentliche Aufgabe, nämlich für die Analyse zur Verfügung steht.

Aus der DE 41 28 698 Al ist ein Analysesystem bekannt, bei dem Proben-, Reagenzien- und Reaktionsgefäße auf einem gemeinsamen Rotor angeordnet sind. Dieses Analysesystem ist mit einem über dem Rotorrand angeordneten Hubpipettor ausgestattet, der in der Lage ist, durch Absenken und Anheben Proben und Reagenzien zwischen unterschiedlichen Positionen auf dem sich dazu verdrehenden Rotor hin und her zu pipettieren. Radial außerhalb des Rotors ist eine fotometrische Meßstation vorgesehen, die Messungen eines innerhalb eines Reaktionsgefäßes im Rotor enthaltenen Fluids durchführen kann. Die Reagenziengefäße auf dem Rotor dieses bekannten Analysesystems sind von Vorratsbehältern gebildet, die mit Abgabeöffnungen versehen sind, in welche die Pipettenspitze des Pipettierarms eintreten kann. Wegen der Anordnung der Reagenzien auf dem Rotor und insbesondere innerhalb größerer Vorratsbehälter auf dem Rotor ist die Anzahl der verwendbaren Reagenzien und/oder die Anzahl der analysierbaren Proben durch den verfügbaren Platz auf dem Rotor begrenzt, sodaß ein derartiges Analysesystem hauptsächlich für standardisierte, wiederkehrende Tests unter Verwendung stets der gleichen Reagenzien einsetzbar ist.

Aus der EP 0 223 002 A2 ist ein automatisches Analysesystem bekannt, bei dem Reagenzienträger Verwendung finden, die jeweils mit einer Mehrzahl von Aufnahmen versehen sind. Eine dieser Aufnahmen dient als Meßküvette, eine als Probenaufnahme und die anderen Aufnahmen enthalten Reagenzien. Eine Mehrzahl von Reagenzienträgern ist nebeneinander in einem translatorisch bewegbaren Magazin aufgenommen, wobei die Reagenzienträgeraufnahmen des Magazins vor den Eingang einer Transferstation gefahren werden können. Der Ausgang der Transferstation ist auf speichenartige Reagenzienträgeraufnahmen einer Drehscheibe gerichtet. Ein Systemreagenzienträger, der aus dem Magazin in die Transferstation verfahren worden ist, wird in der Transferstation verarbeitet, wozu Pipettier- und Saugeinrichtungen mit der Transferstation verbunden sind. Eine in der Transferstation behandelte, in einem zugeordneten Reagenzienträger enthaltene Probe wird nach der Behandlung in der Transferstation auf die drehbare Scheibe transferiert, von welcher sie vor eine optische Analysestation verschwenkt wird, wo die zu analysierende Probe, die sich in der radial äußersten Aufnahme befindet, analysiert wird. Die drehbare Scheibe dieser bekannten Vorrichtung dient daher lediglich als Transportmedium für die Reagenzienträger.

Aufgabe der vorliegenden Erfindung ist es, ein Analysesystem zu schaffen, bei dem sowohl die Gerätekosten als auch die Kosten der einzelnen Tests gegenüber dem Stand der Technik gering sind, das ein breit angelegtes Testmenü und ein einfaches Workflowkonzept aufweist, sodaß variable Einzel-oder Mehrprobenprofile kostengünstig ausgeführt werden können.

Diese Aufgabe wird durch das Analysesystem gemäß Anspruch 1 gelöst, welches ein Analysegerät und zumindest einen Systemreagenzienträger umfaßt, wobei das Analysegerät aufweist: zumindest einen gesteuert drehbar antreibbaren Rotor, erste Aufnahmevorrichtungen für Reagenziengefäße, zweite Aufnahmevorrichtungen für Probengefäße, eine mit einer Pipettiervorrichtung versehene, gesteuert antreibbare und entlang einer Schwenkbahn zum Rotor hin und von diesem weg bewegbare Hub-/Schwenkeinrichtung, eine Waschstation für die Pipettiervorrichtung, eine Detektoreinrichtung und eine Steuerungseinrichtung zur Steuerung des Antriebs des Rotors und des Antriebs der Hub-/Schwenkeinrichtung sowie zur Steuerung des Betriebs der Pipettiervorrichtung und der Detektoreinrichtung, wobei zumindest ein Probengefäß auf der Schwenkbahn der Pipettiervorrichtung plazierbar ist und wobei die ersten Aufnahmevorrichtungen in dem einen Reaktionsrotor bildenden Rotor vorgesehen und zur Aufnahme von Meßküvetten ausgebildet sind , wobei die Detektoreinrichtung im Bereich einer Winkelposition des Reaktionsrotors gelegen ist, so daß die Analyse in einer im Rotor befindlichen Meßküvette erfolgt, und wobei der Systemreagenzienträger zumindest eine mit einem testspezifischen, vorformulierten, naßchemischen Systemreagenz vorbefüllte Küvette und auch die Meßküvette aufweist.

Bevorzugterweise weist der Systemreagenzienträger eine Mehrzahl von nebeneinander angeordneten und miteinander verbundenen Küvetten auf, wobei zumindest eine der Küvetten mit einem testspezifischen, vorformulierten, naßchemischen Systemreagenz vorbefüllt ist.

Vorzugsweise sind an zwei gegenüberliegenden Seiten einer zentralen Meßküvette weitere Küvetten angeordnet, wobei die gegenüberliegenden Seiten bevorzugterweise die radial innere und die radial äußere Seite der in einer Aufnahmevorrichtung eingesetzten Meßküvette, bezogen auf den Radius des Reaktiosrotors, sind. Diese Ausgestaltung eines Systemreagenzienträgers ist insofern vorteilhaft, als daß die zentrale Meßküvette zur Aufnahme der zu analysierenden Probe dient, in welche die in den seitlichen Küvetten aufgenommenen Reagenzien hinzupipettiert werden. Die in der Meßküvette enthaltene und mit den Reagenzien versetzte Probe kann dann anschließend nach einer Verdrehung des Reaktionsrotors vor die Detektoreinrichtung analysiert werden.

Die Kombination aus einem verhältnismäßig einfach und kostengünstig aufgebauten Analysegerät und dem Systemreagenzienträger, der eine oder mehrere individuell testspezifisch mit Systemreagenzien befüllte Küvetten aufweist, wobei jede Küvette für einen Einmal-Analysevorgang ausgelegt ist, bildet die Grundlage für das kostengünstige und flexibel einsetzbare Analysesystem, das auch bei geringen bis mittleren Probenzahlen ein wirtschaftliches und kostengünstiges Arbeiten ermöglicht.

Die Küvetten oder die Meßküvetten eines jeden Systemreagenzienträgers können dabei alle mit demselben Reagenz vorbefüllt sein, woraus sich ein Systemreagenzienträger ergibt, der für Reihenuntersuchungen einer Vielzahl von unterschiedlichen Proben bezüglich eines Analyseparameters geeignet ist. Es können aber auch Systemreagenzienträger vorgesehen sein, deren Küvetten oder Meßküvetten mit unterschiedlichen Reagenzien vorbefüllt sind, um Analysen einer einzelnen Probe bezüglich einer Vielzahl von Analyseparametern durchzuführen.

Vorteilhafterweise weist die Detektoreinrichtung einen fotometrischen Detektor auf. Bei dieser Ausgestaltung können fotometrische Messungen der in der zu untersuchenden Meßküvette enthaltenen Reaktionslösung aus Probe und Reagenz durchgeführt werden.

Vorzugsweise sind die zweiten Aufnahmevorrichtungen von stationären Aufnahmen gebildet, die auf einer Kreisbahn angeordnet sind, welche konzentrisch zur Schwenkbahn der Hub-/Schwenkeinrichtung gelegen ist. Hierdurch wird eine sehr kostengünstige Ausführung des Analysegeräts ermöglicht, bei der nur ein einzelner drehbarer Rotor, nämlich der Reaktionsrotor, vorgesehenen sein muß, während die zweiten Aufnahmevorrichtungen stationär im Analysegerät vorgesehen sind.

Bei einer vorteilhaften Weiterbildung sind die zweiten Aufnahmevorrichtungen auf einem gesteuert drehbar antreibbaren zweiten Rotor vorgesehen, der ringförmig ausgebildet und konzentrisch zum Reaktionsrotor angeordnet sind. Diese Ausgestaltungsform schafft ein Analysegerät mit einer höheren Durchlaufkapazität und ermöglicht eine flexiblere Durchführung der einzelnen Analysen.

Bevorzugt sind die zweiten Aufnahmevorrichtungen sowie die Steuerungseinrichtung so ausgestaltet, daß Reagenzienbehälter in die zweiten Aufnahmevorrichtungen einsetzbar sind. Nicht das mechanische Einsetzen der Reagenzienbehälter in die zweiten Aufnahmevorrichtungen allein, sondern auch die Fähigkeit der Steuerung, einen dort eingesetzten Reagenzienbehälter zu erkennen und in den Test-Verfahrensablauf mit einzubeziehen ermöglicht für bestimmte Einsatzfälle die Verwendung von speziell angesetzten Reagenzien, die in einen Reagenzienbehälter eingefüllt sind, oder die Verwendung von größeren Vorräten eines dann im Reagenzienbehälter vorgesehenen Reagenz', wenn ein und dasselbe Reagenz beispielsweise für mehrere Tests verwendet werden kann.

Besonders vorteilhaft ist es weiterhin, wenn Reagenzienbehälter vorgesehen sind, die zu den Probengefäßen im wesentlichen kompatibel sind, um ebenfalls von den zweiten Aufnahmevorrichtungen aufgenommen werden zu können. Hierdurch wird ermöglicht, daß Reagenzienbehälter mit speziell für eine Analyse oder unterschiedliche Analysen (Universalreagenz) vorbereiteten Reagenzien, die nicht im Umfang von Systemreagenzienträgern hergestellt werden oder werden können, durchführbar sind. Auch kann in derartigen Reagenzienbehältern beispielsweise ein trockenchemisches Reagenz vorgesehen sein, falls dies für spezielle Analysen erforderlich sein sollte. Das trockenchemische Reagenz sollte manuell oder automatisch vor Gebrauch aufgelöst werden. Wird ein derartiger Reagenzienbehälter in eine der zweiten Aufnahmevorrichtungen zusammen mit in anderen Aufnahmevorrichtungen enthaltenen Probengefäßen eingesetzt, so ist zur Analyse vorzugsweise eine leere Meßküvette in der ersten Aufnahmevorrichtung für Systemreagenzienträger vorzusehen.

Vorzugsweise ist eine Wascheinrichtung zur Reinigung von Meßküvetten vorgesehen. Diese Wascheinrichtung ist insbesondere dann von Vorteil, wenn mit leeren Meßküvetten gearbeitet wird, in die sowohl die Probe als auch ein extern zugeführtes Reagenz eingeführt wird, wobei die gewaschene Meßküvette mehrmals verwendet werden kann.

In einer anderen vorteilhaften Ausbildungsform weist das Analysegerät eine Bound/Free-Trennungsstation auf. In dieser Station werden nicht-festphasengebundene detektierbare Substanzen aus dem Reagenz abgetrennt, was bei der Durchführung von heterogenen immunologischen Tests erforderlich ist, wobei im Reagenz eine geeignete spezifische Festphase vorgesehen ist, an die in Abhängigkeit vom Analyt und in Wechselwirkung mit weiteren Reagenzbestandteilen detektierbare Substanzen gebunden werden.

Dabei ist es besonders vorteilhaft, wenn die Detektoreinrichtung einen Fotomultiplier für Chemilumineszenz-Messung aufweist. Dieser Fotomultiplier für Chemilumineszenz-Messung kann zusätzlich oder alternativ zu einem fotometrischen Detektor vorgesehen sein, je nachdem für welche Art von Messungen beziehungsweise Analysen das Analysesystem ausgelegt sein soll.

Vorzugsweise ist im Analysesystem eine Auswerteeinheit vorgesehen, die die von der Detektoreinrichtung ermittelten Daten unter Verwendung von in einer Speichereinrichtung gespeicherten Referenzdaten auswertet. Die Auswerteeinheit kann aber auch durch einen externen handelsüblichen Computer gebildet sein, der mit entsprechenden Daten und Programmen zur Auswertung versehen ist und über eine Schnittstelle mit dem Analysegerät des Analysesystems verbunden ist.

Ist das Analysesystem mit einer Auswerteeinheit versehen, so ist bevorzugt eine Anzeigeeinrichtung zur Anzeige der von der Auswerteeinrichtung gelieferten Ergebnisse vorgesehen.

Auch kann eine Druckereinrichtung zum Ausdrucken der von der Auswerteeinrichtung gelieferten Ergebnisse vorgesehen sein.

Die Küvetten sind in einer bevorzugten Ausgestaltungsform jeweils mit einer durchstechbaren Membran verschlossen. Hierdurch wird gewährleistet, daß die Küvetten bis zum Beginn der Analyse hermetisch verschlossen sind, wodurch die Haltbarkeit der in den Küvetten enthaltenen Reagenzien spürbar erhöht wird und somit die Lagerfähigkeit der Systemreagenzienträger verbessert wird. Weiter wird eine Bewertung des Reagenzzustandes vor der Messung ermöglicht, wodurch eine spätere diagnostische Aussage weiter abgesichert werden kann.

Die Küvetten oder der Systemreagenzienträger können mit einem maschinenlesbaren Identifikationscode für das jeweils in ihnen enthaltene Reagenz versehen sein und das Analysegerät kann eine Lesevorrichtung für diesen Identifikationscode aufweisen. Hierdurch wird ein höherer Automatisierungsgrad bei der Durchführung von Analysen erzielt, da jede mit der Probe zu beschickende Meßküvette oder deren Systemreagenzienträger automatisch erkannt wird und die Steuerungseinrichtung des Analysegeräts sowie die Auswerteeinrichtung die aus der Lesevorrichtung erhaltenen Daten über die Art des in der jeweiligen Meßküvette beziehungsweise im jeweiligen Systemreagenzienträger enthaltenen Reagenz' und somit über den mit dieser durchzuführenden Test weiterverarbeiten können.

Besonders vorteilhaft ist auch, wenn der Systemreagenzienträger oder die Meßküvetten mit einer Herstelleridentifikationscodierung oder einem Herstelleridentifikationscode versehen sind und wenn hierfür eine Erkennungs- und Dekodierungsvorrichtung vorgesehen ist, wobei vorteilhafterweise die Lesevorrichtung ausgelegt ist, auch die Herstelleridentifikationscodierung zu lesen. Hierdurch kann verhindert werden, daß für dieses Analysesystem ungeeignete Systemreagenzienträger oder Meßküvetten verwendet werden, die unter Umständen zu falschen Analyseergbnissen führen könnten, so daß die Analysesicherheit weiter erhöht wird. Eine entsprechende Codierung kann beispielsweise mechanisch (Schlüssel-Schloß-Prinzip), elektrisch, elektronisch oder optisch erfolgen, wobei die Codierung auch ein anderweitig geschütztes Element umfassen kann, wie beispielsweise eine Marke oder ein geschütztes Designelement.

Sind die Meßküvetten eines Systemreagenzienträgers oder einzelne Systemreagenzienträger untereinander jeweils über Sollbruchstellen miteinander verbunden, so können bei Bedarf einzelne oder mehrere Meßküvetten vom Systemreagenzienträger oder Systemreagenzienträger voneinander abgetrennt werden, wenn für die anstehenden Tests beispielsweise nur einige wenige Meßküvetten oder Systemreagenzienträger benötigt werden.

Die Erfindung betrifft weiterhin eine Analysegerät, insbesondere für ein erfindungsgemäßes Analysesystem, mit zumindest einem gesteuert drehbar antreibbaren Rotor, ersten Aufnahmevorrichtungen für Reagenziengefäße, zweiten Aufnahmevorrichtungen für Probengefäße, einer mit einer Pipettiervorrichtung versehenen, gesteuert antreibbaren und entlang einer Schwenkbahn zum Rotor hin und von diesem weg bewegbaren Hub-/Schwenkeinrichtung, einer Waschstation für die Pipettiervorrichtung, einer Detektoreinrichtung und einer Steuerungseinrichtung zur Steuerung des Antriebs des Rotors und des Antriebs der Hub-/Schwenkeinrichtung sowie zur Steuerung des Betriebs der Pipettiervorrichtung und der Detektoreinrichtung, wobei zumindest ein Probengefäß auf der Schwenkbahn der Pipettiervorrichtung plazierbar ist und wobei der Rotor zur Aufnahme von zumindest einer Meßküvette ausgebildet ist, wobei die ersten Aufnahmevorrichtungen in dem einen Reaktionsrotor bildenden Rotor vorgesehen und zur Aufnahme von Meßküvetten ausgebildet sind und die Detektoreinrichtung im Bereich einer Winkelposition des Reaktionsrotors gelegen ist, so daß die Analyse in einer im Rotor befindlichen Meßküvette erfolgt.

Vorteilhafte Weiterbildungen des Analysegeräts, die den gerätespezifischen vorteilhaften Weiterbildungen des Analysesystems entsprechen, sind in den Unteransprüchen angegeben.

Außerdem betrifft die Erfindung einen Systemreagenzienträger, insbesondere für ein erfindungsgemäßes Analysesystem, mit zumindest einer mit einem testspezifischen, vorformulierten, naßchemischen Systemreagenz vorbefüllten Küvette, wobei die Küvette mit einem maschinenlesbaren Identifikationscode für das jeweils in ihr enthaltene Reagenz versehen ist und wobei das Analysegerät eine Lesevorrichtung für den Identifikationscode aufweist, wobei die Küvette oder der Systemreagenzienträger mit einer Herstelleridentifikationscodierung versehen ist, die von einer Lesevorrichtung eines zugeordneten Analysegeräts auslesbar und auswertbar ist.

Ein alternativer Systemreagenzienträger zeichnet sich dadurch aus, daß eine Mehrzahl von nebeneinander angeordneten und miteinander verbundenen Küvetten vorgesehen ist, wobei zumindest eine der Küvetten mit einem testspezifischen, vorformulierten, naßchemischen Systemreagenz vorbefüllt ist.

Vorzugsweise ist ein erfindungsgemäßer Systemreagenzienträger so ausgebildet, daß eine zentrale Küvette vorgesehen ist, die als Meßküvette ausgebildet ist und daß zumindest an einer Seite der zentralen Küvette, deren oberer Öffnung benachbart, zumindest eine weitere Küvette im Systemreagenzienträger vorgesehen ist, die einen Aufnahmeraum für ein Systemreagenz bildet, wobei die zentrale Küvette und die weitere(n) Küvette(n) eine Küvettenanordnung bilden.

Vorteilhafte Weiterbildungen des Systemreagenzienträgers, die den systemreagenzienträgerspezifischen Weiterbildungen des Analysesystems entsprechen, sind in den Unteransprüchen angegeben.

Die Erfindung wird nachfolgend anhand eines Beispiels unter Bezugnahme auf die Zeichnung näher erläutert; in dieser zeigt:

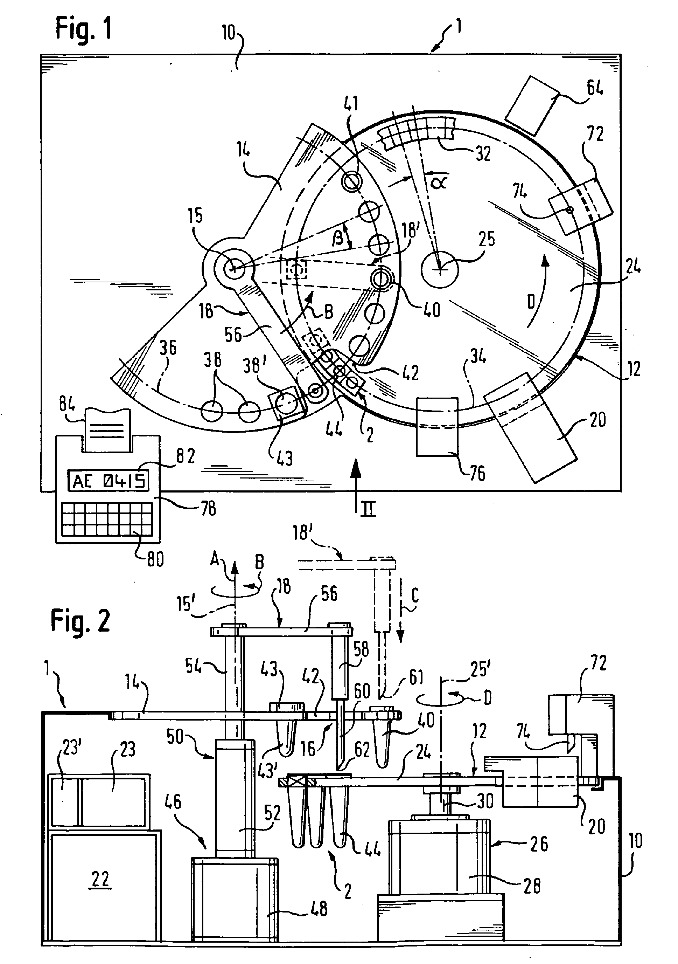

- **Fig. 1.**: eine schematische Draufsicht auf ein Analysesystem gemäß einer ersten Ausführungsform der Erfindung;
- **Fig**. **2.**: eine geschnittene Seitenansicht eines Analysesystems gemäß der ersten Ausführungsform der Erfindung in Richtung des Pfeils II in Fig. 1;
- **Fig**. **3.**: eine perspektivische Ansicht eines Systemreagenzienträgers und einer Lesevorrichtung;
- **Fig**. **4.**: einen Vertikalschnitt durch eine Meßküvette eines Systemreagenzienträgers;
- **Fig**. **5.**: eine Draufsicht auf einen Ausschnitt eines Analysesystems gemäß einer zweiten Ausführungsform der Erfindung und
- **Fig**. **6.**: eine perspektivische Ansicht eines alternativen Systemreagenzienträgers.

Das in Fig. 1 gezeigte Analysesystem für die medizinische Analytik umfaßt eine Analysegerät 1 mit einem Gehäuse 10 und zumindest einen Systemreagenzienträger 2.

Die Hauptkomponenten des Analysegeräts 1 sind ein Reaktionsrotor 12, ein Aufnahmeteil 14 mit zweiten Aufnahmevorrichtungen 38 für Probengefäße 40, eine mit einer Pipettiervorrichtung 16 versehene Hub-/Schwenkeinrichtung 18, eine Waschstation 43 für die Pipettiervorrichtung 16, eine Detektoreinrichtung 20 und eine Steuerungseinrichtung 22 (Fig. 2).

Der Reaktionsrotor 12 umfaßt ein rotierendes Aufnahmeteil 24, das in der Ausführungsform gemäß den Fig. 1 und 2 als rotierbare Scheibe ausgebildet ist, das aber auch als rotierbarer Kreisring ausgebildet sein kann. Die Rotationsebene, in der das rotierende Aufnahmeteil 24 rotiert, ist horizontal ausgerichtet.

Das rotierende Aufnahmeteil wird über einen Antrieb 26 gesteuert drehbar angetrieben, wobei der Antrieb 26 einen Schrittmotor 28 aufweist, der das rotierende Aufnahmeteil 24 mit jedem Rotationsschritt um einen vorgebbaren Drehwinkel α weiterbewegt. Der Schrittmotor 28 ist über eine Motorwelle 30 mit dem rotierenden Aufnahmeteil 24 in dessen Zentrum verbunden. Die Motorwelle 30 ist um eine vertikal durch das Zentrum 25 verlaufende Achse 25' drehbar. Anstelle des Schrittmotors 28 kann auch ein anderer Antrieb vorgesehen sein, der mit einer Steuerung versehen ist, die eine genaue winkelmäßige Ausrichtung des rotierenden Aufnahmeteils 24 gestattet.

In dem in den Figuren nicht gezeigten Fall, in dem das rotierende Aufnahmeteil kreisringförmig ausgebildet ist, kann die Motorwelle mit einem Ritzel versehen sein, das mit einem Zahnrad am Außen- oder Innenumfang des ringförmigen rotierenden Aufnahmeteils oder eines mit dem Aufnahmeteil verbundenen ringförmigen Zahnrads kämmt.

Das rotierende Aufnahmeteil 24 ist mit ersten Aufnahmevorrichtungen 32 für einen oder mehrere Systemreagenzienträger 2 versehen, wobei die ersten Aufnahmevorrichtungen 32 auf einer Kreisbahn 34 gelegen sind, die konzentrisch ist zum rotierenden Aufnahmeteil 24,und wobei die ersten Aufnahmevorrichtungen 32 dem Umfang des rotierenden Aufnahmeteils 24 benachbart gelegen sind.

Das Gehäuse 10 des Analysegeräts 1 ist auf seiner Oberseite weiterhin mit dem Aufnahmeteil 14 für die Probengefäße 40 versehen, das ebenfalls horizontal ausgerichtet ist. Das Aufnahmeteil 14 ist in der Ausführungsform gemäß den Fig. 1 und 2 von im wesentlichen kreissektorförmigem Grundriß. Alternativ kann das Aufnahmeteil 14 auch kreisförmig, kreisringförmig oder kreissegmentförmig ausgebildet sein. Das Aufnahmeteil 14 ist höher als das rotierende Aufnahmeteil 24 angeordnet. Das Aufnahmeteil 14 ist mit den zweiten Aufnahmevorrichtungen 38 versehen, die auf einer Kreisbahn 36 mit dem Zentrum 15 konzentrisch zum kreissektorförmigen Aufnahmeteil 14 angeordnet sind. Das Zentrum 15 ist vom Zentrum 25 des rotierenden Aufnahmeteils 24 beabstandet, wobei der Abstand zwischen diesen beiden Zentren oder Mittelpunkten 15 und 25 gleich oder geringer ist als die Summe des Radius' der Kreisbahn 34 und des Radius' der Kreisbahn 36, so daß sich die Kreisbahnen 34 und 36 schneiden.

Im Bereich einer Überschneidung der beiden Kreisbahnen 34 und 36 ist das Aufnahmeteil 14 mit einer radial einwärts gerichteten Ausnehmung 42 des Umfangs versehen, die in der in Fig. 1 gezeigten Draufsicht einen vertikalen Zugang zu der an der Stelle dieser Überschneidung der Kreisbahnen 34, 36 gelegenen Meßküvette 44 des dort im rotierenden Aufnahmeteil 24 aufgenommenen Systemreagenzienträgers 2 oder zu weiteren Küvetten dieses Systemreagenzienträgers 2 gestattet.

Am Ort einer der Ausnehmung 42 des Aufnahmeteils 14 benachbarten Aufnahmevorrichtung 38' ist die Pipettenwaschstation 43 vorgesehen, mittels derer die Pipettiervorrichtung 16 und insbesondere das Pipettenröhrchen 60 gespült werden kann, um für eine neue Analyse gereinigt bereitzustehen. Die Pipettenwaschstation 43 kann beispielsweise aus einem Waschgefäß 43' bestehen, welches über einen (nicht gezeigten) Zulauf und Ablauf mittels einer Waschflüssigkeit befüllbar beziehungsweise entleerbar ist.

Im Zentrum 15 der Kreisbahn 36 ist die Hub-/Schwenkeinrichtung 18 so gelagert, daß sie um die Achse 15 schwenkbar und entlang der im Zentrum 15 gelegenen Vertikalachse 15' vertikal bewegbar ist.

Die Hub-/Schwenkeinrichtung 18 umfaßt einen Hub-/Schwenkantrieb 46, der einen Motor 48 aufweist, welcher vorzugsweise als Schrittmotor ausgebildet ist, um die Hub-/Schwenkeinrichtung 18 um die Achse 15' vorzugsweise in äquidistanten Schritten zu verschwenken, wobei jeder Schritt einem Winkel β entspricht, der dem Bogenabstand zwischen zwei benachbarten zweiten Aufnahmevorrichtungen 38 entspricht.

Der Hub-/Schwenkantrieb 46 weist weiterhin eine Kolben-Zylinder-Einheit 50 auf, die eine Vertikalbewegung der Hub-/Schwenkeinrichtung 18 ermöglicht. In Fig. 2 ist beispielhaft der Zylinder 52 von einer Motorwelle des Motors 48 zur Schwenkbewegung angetrieben. Der nach oben aus dem Gehäuse 1 hervorstehende und durch das Zentrum 15 des Aufnahmeteils 14 hindurchtretende Kolben 54 wird somit vom Motor 48 zur Schwenkbewegung angetrieben und vom Kolben 52 zur Vertikalbewegung angetrieben.

An seinem oberen, freien Ende ist der Kolben 54 mit einem sich im wesentlichen horizontal erstreckenden Arm 56 versehen, der sich im wesentlichen radial nach außen von der Achse 15' wegerstreckt. Der Arm 56 erstreckt sich in Radialrichtung bis etwa zur Kreisbahn 36 oder geringfügig darüber hinaus. Im Schnittpunkt des Arms 56 mit der Kreisbahn 36 (in der Draufsicht der Fig. 1 betrachtet) ist eine Pipettenaufnahme 58 angebracht, die sich vom Arm 56 nach unten in Richtung auf die Oberfläche des Aufnahmeteils 14 erstreckt und an dessen unterem freien Ende ein Pipettenröhrchen 60, vorzugsweise auswechselbar, eingesetzt ist.

Das Pipettenröhrchen 60 ist an seinem unteren, freien Ende zur Bildung einer Spitze 62 abgeschrägt. Die Pipettiervorrichtung 16 ist mit einer (nicht gezeigten) Saugvorrichtung vorgesehen, die innerhalb des Pipettenröhrchens 60 einen Unterdruck oder einen Überdruck zum Saugen beziehungsweise zum Ausstoßen von Fluid in das Pipettenröhrchen 60 beziehungweise aus dem Pipettenröhrchen 60 heraus erzeugen kann.

In Fig. 1 ist auch eine Wascheinrichtung 72 für die Meßküvetten 44, 44', 44" schematisch gezeigt, mittels derer benutzte Meßküvetten bei Bedarf entleert und gespült werden können. Dazu besitzt die Wascheinrichtung 72 ein vertikal verfahrbares Waschröhrchen 74, das ähnlich wie das Pipettenröhrchen 60 ausgebildet und mit einer unteren Spitze zum Durchstoßen der Membran 47 versehen ist. Mittels der Wascheinrichtung 72 können insbesondere leere Meßküvetten 44 gereinigt werden, die zur Durchführung von Analysen mit Reagenzien dienen, welche aus einem externen Reagenzienbehälter 41 entnommen werden.

Das in Fig. 1 gezeigte Analysegerät 1 besitzt auch eine Bound/Free-Trennungsstation 76, die in Fig. 1 nur schematisch dargestellt ist. Die Bound/Free-Trennungsstation kann ähnlich wie die Wascheinrichtung 72 ausgebildet sein und ebenfalls mit einem (nicht gezeigten) vertikal verfahrbaren Röhrchen versehen sein, das eine spezielle Waschlösung in eine Meßküvette einführt und aus dieser zur Durchführung eines Bound/Free-Trennungsverfahrens wieder entnimmt. Bei einem Bound/Free-Trennungsverfahren werden Moleküle einer in der zu analysierenden Lösung enthaltenen Substanz an für diese Substanz spezifische Bindepartner auf Partikeln oder an der Wand des Probegefäßes gebunden (Bound-Phase) und von solchen Molekülen abgetrennt, die frei in der Lösung umherschwimmen (Free-Phase). Ein Bound/Free-Trennungsverfahren ist somit ein Waschverfahren, bei dem die Waschlösung so oft ersetzt wird, daß in der Meßküvette im wesentlichen nur noch gebundene Moleküle zurückbleiben.

Das in den Fig. 1 und 2 gezeigte Analysegerät 1 weist auch eine Auswerteeinrichtung 23 auf, die in Fig. 2 schematisch dargestellt ist und die die von der Detektoreinrichtung 20 ermittelten Daten unter Verwendung von in einer ebenfalls in Fig. 2 nur schematisch dargestellten Speichereinrichtung 23' gespeicherten Referenzdaten auswertet. Die Detektoreinrichtung 20, die Auswerteeinrichtung 23 und die Speichereinrichtung 23' sind dazu in nicht gezeigter Weise zum Datenaustausch miteinander verbunden.

Wie in Fig. 1 zu erkennen ist, ist das Analysegerät mit einem Terminal 78 versehen, das ein Bedienfeld 80 zur Bedienung des Analysegeräts 1 und insbesondere zur Eingabe von Daten in die Steuerungseinrichtung 22 aufweist. Weiterhin ist im Terminal 78 eine Anzeigeeinrichtung 82 vorgesehen, die zur Anzeige der von der Auswerteeinrichtung 23 gelieferten Ergebnisse dient. Über eine ebenfalls im Terminal 78 vorgesehene Druckereinrichtung 84 können die von der Auswerteeinrichtung 23 gelieferten Ergebnisse auch ausgedruckt werden.

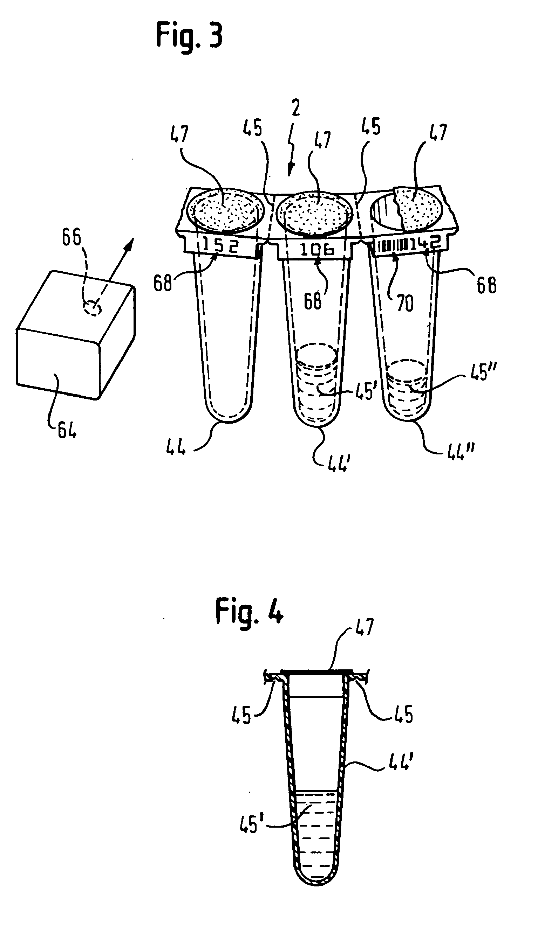

Das Analysegerät 1 weist weiterhin eine Lesevorrichtung 64 auf, die im Bereich des Umfangs des Reaktionsrotors 12 außerhalb von diesem gelegen ist. Die Lesevorrichtung 64 kann als Klarschriftleser, als Pixelcodeleser und/oder als Bar-Code-Leser in bekannter Weise ausgebildet sein, wobei die Sensoreinrichtung 66 der Lesevorrichtung 64 zum Reaktionsrotor 12 gerichtet ist. Die Leserichtung der Sensoreinrichtung 66 ist im wesentlichen radial einwärts bezüglich des Reaktionsrotors 12 gerichtet und die Höhenlage der Sensoreinrichtung 66 ist oberhalb oder unterhalb des Reaktionsrotors 12 so gewählt, daß die Sensoreinrichtung 66 in der Lage ist, entsprechende Markierungen 68, 70 auf den Systemreagenzienträgern 2 oder auf den einzelnen Küvetten oder Meßküvetten 44, 44', 44" zu lesen, wie in Fig. 3 dargestellt ist. Die Markierungen können einen Identifikationscode 68 für das jeweilige Reagenz und/oder einen Herstellungsidentifikationscode 70 zur Identifikation des Herstellers des Systemreagenzienträgers 2 umfassen, wobei in Fig. 3 lediglich beispielhaft der Identifikationscode 68 für das jeweilige Reagenz in Klarschrift gezeigt ist und der Herstelleridentifikationscode 70 als Bar-Code gezeigt ist.

Die in Bogenform entsprechend der Kreisbahn 34 nebeneinander angeordneten Meßküvetten 44, 44', 44" einer ersten Variante eines Systemreagenzienträgers 2 sind in ihrem oberen, im wesentlichen rechteckig ausgebildeten Endabschnitt unter Bildung einer Sollbruchstelle 45 so miteinander verbunden, daß die Meßküvetten 44, 44', 44" bei Bedarf voneinander getrennt und somit vereinzelt werden können. Dies ermöglicht es dem Anwender, nur soviele Meßküvetten dieses Systemreagenzienträgers 2 zu entnehmen, wie für die geplante Analyse erforderlich sind.

In Fig. 3 ist weiterhin dargestellt, daß zwei der Meßküvetten des dort gezeigten Systemreagenzienträgers 2, nämlich die Meßküvetten 44' und 44", in jeweils unterschiedlicher Füllhöhe mit einem Reagenz 45' beziehungsweise 45" vorbefüllt sind, während die Meßküvette 44 leer ist und für Analysen von Proben mittels eines nicht im Systemreagenzienträger 2 vorgesehenen Reagenz' bereitsteht, welches Reagenz in einem externen Reagenzienbehälter 41 enthalten ist, der in seiner Form zu den Probengefäßen 40 im wesentlichen kompatibel ist, so daß er ebenfalls von den zweiten Aufnahmevorrichtungen 38 aufgenommen werden kann.

Bei dem in Fig. 3 gezeigten Systemreagenzienträger 2, bei dem die jeweiligen Reagenzien in einzelnen Meßküvetten 44', 44 " vorgesehen sind, besteht die Möglichkeit der Validierung der Reagenzien vor der Durchführung einer Analyse der in die leere Meßküvette 44 einzufüllenden Probe. Bei dieser Validierung eines Reagenz' wird das Reagenz von der Detektoreinrichtung 20 gemessen und der Meßwert wird mit einem Referenzwert verglichen, wodurch eine Bewertung des Reagenzzustandes vor der Analyse der Probe ermöglicht wird.

Fig. 4 zeigt einen Längsschnitt durch eine Meßküvette 44', die mit dem Reagenz 45' vorbefüllt ist. Die Meßküvette 44' ist, wie alle anderen Meßküvetten des Systemreagenzienträgers 2, an ihrer Oberseite mit einer Membran 47 hermetisch verschlossen. Die Membran 47 besteht aus einem elastisch weichen Material, das von der Spitze 62 des Pipettenröhrchens 60 durchstoßen werden kann, wobei sich die dabei entstehende Durchstoßöffnung nach dem Herausziehen des Pipettenröhrchens 60 wieder soweit im wesentlichen verschließt, daß keine Fremdkörper in das Innere der Meßküvette 44' eindringen können.

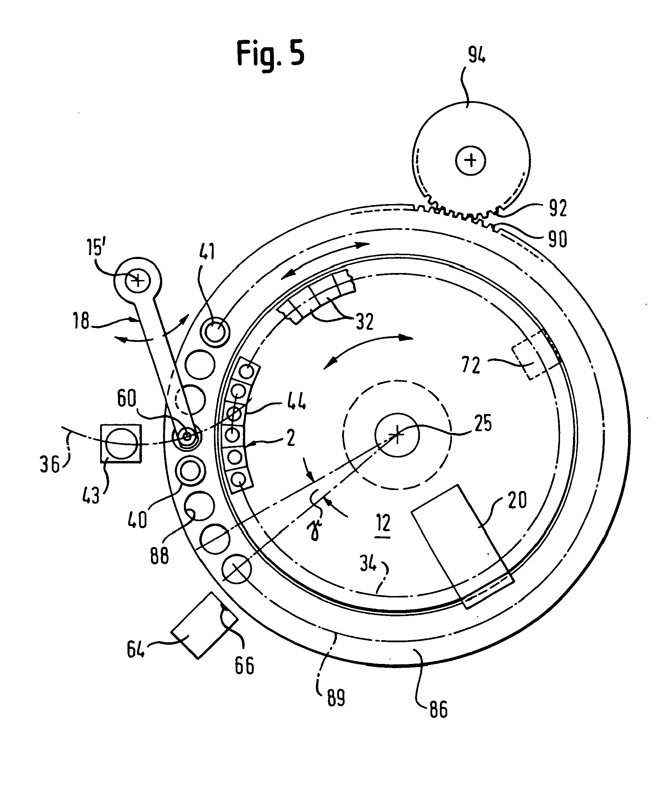

Fig. 5 zeigt eine zweite Ausführungsform des Analysesystems der vorliegenden Erfindung, wobei jene Bestandteile des Analysesystems, die denen der ersten Ausführungsform entsprechen, mit denselben Bezugsziffern bezeichnet sind.

In der zweiten Ausführungsform ist der Reaktionsrotor 12 in der gleichen Weise aufgebaut und mit ersten Aufnahmevorrichtungen 32 für Systemreagenzienträger 2 versehen, wie dies in Verbindung mit den Fig. 1 und 2 beschrieben worden ist. Der Reaktionsrotor 12 ist von einem ringförmigen zweiten Rotor 86 umgeben, der Aufnahmen 88 für die Probengefäße 40 sowie für die kompatibel dazu ausgebildeten Reagenzienbehälter 41 aufweist. Der ringförmige zweite Rotor 86 ist konzentrisch zum Reaktionsrotor 12 angeordnet, so daß sein Drehzentrum ebenfalls im Drehzentrum 25 des Reaktionsrotors 12 liegt.

An seinem Außenumfang ist der ringförmige zweite Rotor 86 mit einer Verzahnung 90 versehen, die mit der Verzahnung 92 eines Antriebsritzels 94 einer (nicht gezeigten) Antriebseinheit für den zweiten Rotor 86 im Eingriff steht. Die Antriebseinheit für das Ritzel 94 weist bevorzugterweise, ebenso wie der Antrieb 26 des Reaktionsrotors 12, einen Schrittmotor auf, der den zweiten Rotor 86 jeweils um einen Winkel γ weiterbewegt. Der Winkel γ entspricht dabei dem Bogenabstand von zwei benachbarten Aufnahmen 88, wobei die Mittelpunkte der Aufnahmen 88 auf einer Kreisbahn 89 um eine vertikale Achse durch das Zentrum 25 gelegen sind. Der Reaktionsrotor 12 und der zweite ringförmige Rotor 86 liegen bei der Ausführungsform der Fig. 5 in einer Ebene (der Zeichenebene in Fig. 5); sie können aber auch in Vertikalrichtung zueinander versetzt sein.

Der Hub-/Schwenkpipettor 18 ist bei dieser Ausführungsform außerhalb des Umfangs des zweiten ringförmigen Rotors 86 um eine Achse 15' schwenkbar gelagert. Die technische Ausführung des Hub-/Schwenkpipettors 18 entspricht der des ersten Ausführungsbeispiels. Das Pipettenröhrchen 60 des Hub-/Schwenkpipettors 18 läuft beim Schwenken, ebenso wie im ersten Ausführungsbeispiel, auf einer Kreisbahn 36.

Die Kreisbahn 36 schneidet sowohl die Kreisbahn 89, auf der die Aufnahmen 88 des ringförmigen zweiten Rotors 86 gelegen sind, als auch die Kreisbahn 34, auf der die ersten Aufnahmevorrichtungen 32 für die Systemreagenzienträger 2 vorgesehen sind. Die Orte der Verschneidung der Kreisbahn 36 mit den Kreisbahnen 89 und 34 bilden jeweils Anhaltepunkte für den Schrittantrieb des ringförmigen zweiten Rotors 86 beziehungsweise des Reaktionsrotors 12 derart, daß in diesen Verschneidungspunkten ein Probengefäß 40 oder ein Reagenzienbehälter 41 beziehungsweise eine Meßküvette 44 beim Stillstand des jeweiligen Antriebs zu liegen kommen können. Auf der Kreisbahn 36 ist außerhalb des Umfangs des ringförmigen zweiten Rotors 86 die Pipettenwaschstation 43 gelegen, die wie in der ersten Ausführungsform beschrieben ausgebildet ist.

Auch die in Fig. 5 nur schematisch gezeigte Detektoreinrichtung 20 und die ebenfalls nur schematisch dargestellte Küvettenwaschstation 72 sind ähnlich wie in der ersten Ausführungsform ausgebildet, wobei ihre jeweilige Lage den veränderten örtlichen Gegebenheiten der zweiten Ausführungsform angepaßt ist, wie aus Fig. 5 zu erkennen ist. Die schematisch gezeigte Lesevorrichtung 64 ist außerhalb des Außenumfangs des ringförmigen zweiten Rotors 86 angebracht und mit ihrer Sensoreinrichtung 66 radial einwärts gerichtet, so daß die auf den Systemreagenzienträgern 2 vorgesehenen Code-Informationen 68, 70 über den ringförmigen zweiten Rotor 86 hinweg gelesen werden können.

Da die Hub-/Schwenkeinrichtung 18 bei der zweiten Ausführungsform wesentlich kürzere Schwenkwege zurücklegen muß, nämlich im Regelfall nur Schwenkwege zwischen einer Position über dem Zentrum einer Aufnahme 88 auf dem ringförmigen zweiten Rotor 86 und der benachbarten Position über einer Meßküvette 44 des Systemreagenzienträgers 2 beziehungsweise der benachbarten Position über der Pipettenwaschstation 43, kann eine flexiblere Verarbeitung der einzelnen Analysen erfolgen als beim Analysesystem der ersten Ausführungsform.

Eine Funktionsweise des erfindungsgemäßen Analysesystems wird nun anhand der Fig. 1 und 2 näher erläutert. Die Hub-/Schwenkeinrichtung 18 fährt aus ihrer in durchgezogenen Linien dargestellten Ruheposition zu einem die zu analysierende Probe enthaltenden Probengefäß 40, indem die Hub-/Schwenkeinrichtung zunächst vertikal nach oben ausfährt (Pfeil A) und dann in Richtung des Pfeiles B entgegen dem Uhrzeigersinn in die gestrichelt gezeichnete Position 18' verschwenkt wird. Danach wird die Hub-/Schwenkeinrichtung 18 in Richtung des Pfeils C abgesenkt, wobei das Pipettenröhrchen 60 so weit in das Probengefäß 40 eintritt, daß die am freien Ende des Pipettenröhrchens 60 vorhandene Öffnung 61 in die im Probengefäß 40 enthaltene Probe eintaucht. Daraufhin wird mittels der in den Figuren nicht dargestellten Saugeinrichtung der Pipettiervorrichtung 16 eine vorbestimmte Probenmenge in die Pipettiervorrichtung 16 eingesaugt, wobei die Steuerung dieses Ansaugvorgangs durch die Steuerungseinrichtung 22 erfolgt.

Daraufhin wird der Hub-/Schwenkpipettor 18 wieder entgegen dem Pfeil C angehoben und im Uhrzeigersinn entgegen dem Pfeil B zurückgeschwenkt bis das Pipettenröhrchen 60 über der im Schnittpunkt der Kreisbahnen 34 und 36 gelegenen Meßküvette 44 des Systemreagenzienträgers 2 zu liegen kommt. Anschließend wird der Hub-Schwenk-Pipettor 18 wieder in Richtung des Pfeils C abgesenkt, wobei die Spitze 62 des Pipettenröhrchens 60 die Membran 47 der Meßküvette 44 durchstößt, so daß sich die Öffnung 61 des Pipettenröhrchens innerhalb der Meßküvette 44 befindet. Daraufhin wird die vorbestimmte angesaugte Probenmenge aus der Pipettiervorrichtung 16 durch die Öffnung 61 in die Meßküvette 44 ausgestoßen, so daß die Probe und das in der Meßküvette 44 befindliche Reagenz miteinander in Kontakt geraten.

Der Hub-Schwenk-Pipettor 18 wird dann wieder in Richtung des Pfeiles A angehoben und zur Pipettenwaschstation 43 verschwenkt, wo durch Absenken des Pipettenröhrchens 60 in das in der Pipettenwaschstation 43 befindliche Waschfluid und mehrmaliges Ansaugen und Ausstoßen von Waschfluid mittels der Saugeinrichtung eine Reinigung der Pipettiervorrichtung 16 erfolgt. Anschließend verfährt die Hub-/Schwenkeinrichtung 18 wieder in die in durchgezogenen Linien dargestellte Ruheposition.

Nachdem das Pipettenröhrchen 60 aus der Meßküvette 44 herausgezogen worden ist, werden die Probe und das in der Meßküvette 44 befindliche Reagenz miteinander auf bekannte Weise vermischt und danach dreht sich der Reaktionsrotor 12 entgegen dem Uhrzeigersinn in Richtung des Pfeiles D bis die Meßküvette 44 in der Detektoreinrichtung 20 angekommen ist. Dort erfolgt nun auf bekannte Weise die fotometrische Analyse des in der Meßküvette 44 enthaltenen Gemisches aus Reagenz und Probe.

Die von der Detektoreinrichtung 20 ermittelten Daten werden dann an die Auswerteeinrichtung 23 weitergeleitet, wo sie auf an sich bekannte Weise unter Verwendung von in der Speichereinrichtung 23' gespeicherten Kalibrierdaten ausgewertet werden und woraufhin die von der Auswerteeinrichtung 23 ermittelten Daten an die Anzeigeeinrichtung 82 und/oder den Drucker 84 weitergegeben werden.

Die Information über das in der Meßküvette 44 enthaltene Reagenz erhält die Auswerteeinrichtung 23 von der Lesevorrichtung 64, die bei einem Vorbeilauf der Meßküvette 44 an der Lesevorrichtung 64 den auf der Meßküvette 44 aufgebrachten Identifikationscode ausliest und an die Speichereinrichtung 23' weitergibt. Da der Rotationswinkel zwischen der Lesevorrichtung 64 und dem Ort der Analyse (dem in Fig. 1 unteren Schnittpunkt der beiden Kreisbahnen 36, 34) bekannt ist, kann über einen Schrittzähler, der die Bewegungsschritte des Reaktionsrotors 12 addiert beziehungweise subtrahiert (je nach Rotationsrichtung) ständig die genaue Position jeder im Reaktionsrotor aufgenommenen Meßküvette ermittelt werden, so daß es auf diese Weise möglich ist, die am Analyseort (in der Detektoreinrichtung 20) befindliche Meßküvette 44 genau zu identifizieren.

Im Falle einer Analyse unter Verwendung der Bound/Free-Trennung wird beispielsweise eine feindisperse Magnetpartikellösung als Festphase zusammen mit ersten Antikörpern als erstes Reagenz verwendet. Ein zweites Reagenz enthält ein Label mit einem zweiten Antikörper. Ein drittes Reagenz enthält ein Substrat oder eine Detektionslösung. Falls dies erforderlich sein sollte, kann auch eine Vorbehandlungslösung als weiteres Reagenz vorgesehen sein. Die vorgenannten Reagenzien sind jeweils in einer Meßküvette eines Systemreagenzienträgers 2 enthalten. Alternativ kann eine der Küvetten anstatt mit dem ersten Reagenz (z. B. beschichtete Magnetpartikel) vorbefüllt zu sein, auch direkt mit einem entsprechenden Bindepartner beschichtet sein. Als drittes Reagenz (Substrat oder Detektionslösung) kann auch ein Universalreagenz vorgesehen sein. In Abhängigkeit vom verwendeten Label ist die Auswahl des Detektors (z. B. Fotomultiplier fur Chemilumineszenzmessung) zu treffen.

Die vorstehend beschriebene Funktionsweise des erfindungsgemäßen Analysesystems dient nur zur Erläuterung der prinzipiellen Arbeitsweise. Grundsätzlich sind auch andere Arbeitsweisen möglich, wie beispielsweise eine Pipettierung von Meßküvette zu Meßküvette, was beispielsweise bei einem Test unter Verwendung mehrerer Reagenzien durchgeführt wird, wobei zunächst die Probe in ein erstes Reagenz pipettiert wird, dann gemischt und anschließend fotometrisch gemessen wird, danach wird beispielsweise ein zweites Reagenz aus einer anderen Meßküvettel in die erste Meßküvette mit der Probe und dem ersten Reagenz pipettiert, danach wird wieder gemischt und anschließend nochmals fotometrisch gemessen. Andere Arbeitsweisen sind beispielsweise die Pipettierung eines Reagenz' aus einem Reagenzienbehälter, der sich in einer Aufnahmevorrichtung für Probengefäße befindet, in eine leere Meßküvette und darauffolgend das Hinzupipettieren einer Probe. Auch kann ein Universalreagenz vorgesehen sein, das für eine Vielzahl unterschiedlicher Tests verwendet werden kann.

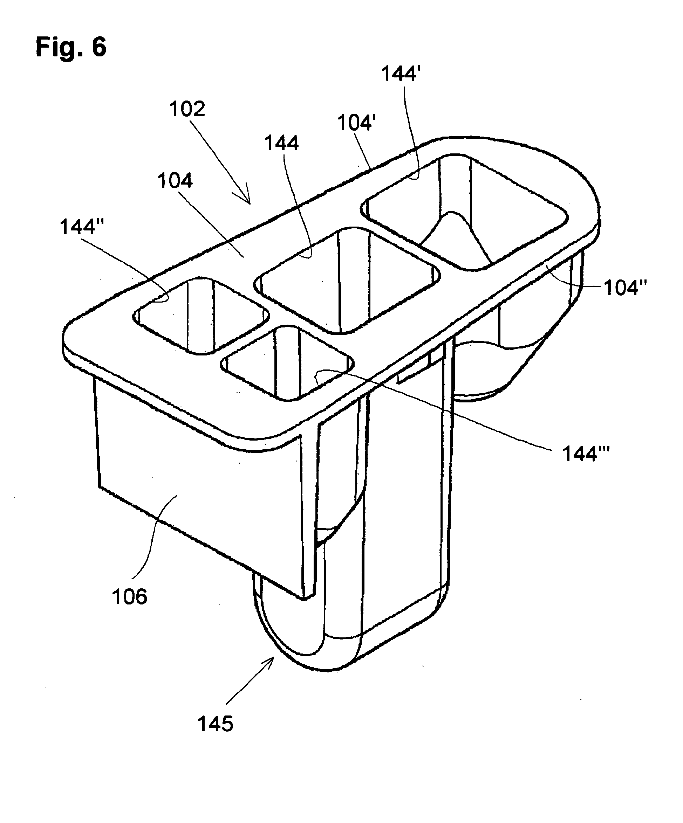

Fig. 6 zeigt eine alternative Ausgestaltung eines Systemreagenzienträgers 102, der aus einer Mehrzahl von Kammern oder Küvetten 144, 144', 144", 149"' besteht. Dabei ist eine zentrale Küvette 144 vorgesehen, die länger als die weiteren Küvetten 144', 144", 144"' ist und die nach unten über diese weiteren Küvetten hervorsteht. Die zentrale Küvette 144 dient als Meßküvette und ist zur Aufnahme durch eine erste Aufnahmevorrichtung 32 des Reaktionsrotors 12 ausgebildet. Die weiteren Küvetten 144', 144", 144"' sind an zwei gegenüberliegenden Seiten der Meßküvette 144, deren Öffnung benachbart, angeordnet.

Die einzelnen Küvetten 144, 144', 144", 144"' sind über einen Rahmen 104 miteinander verbunden, der gleichzeitig eine obere Fläche bildet, in der die Öffnungen der Küvetten ausgebildet sind. Der Rahmen 104 ist in der Draufsicht von im wesentlichen trapezförmiger Gestalt, das heißt, daß die beiden Längsseiten 104', 104" des Rahmens 104 in einem spitzen Winkel zueinander verlaufen. Auf diese Weise ist es möglich, mehrere Systemreagenzienträger 102 nebeneinander in die Aufnahmevorrichtungen 32 des Reaktionsrotors 12 tortenstückartig einzusetzen. Dabei ist die auf der einen Seite der Meßküvette 144 gelegene Küvette 144' bezüglich des Reaktionsrotors radial innerhalb der Meßküvette 144 gelegen, und die auf der anderen Seite der Meßküvette 144 angeordneten Küvetten 144", 144"' sind radial außerhalb der Meßküvette 144 gelegen.

An seiner radial äußeren Seite ist der Systemreagenzienträger 102 mit einer sich im wesentlichen vertikal erstreckenden Seitentafel 106 versehen, die zur Anbringung des Identifikationscodes 68 und der Herstelleridentifikationscodierung 70 geeignet ist.

Im Gebrauchszustand sind die Kammern oder Küvetten 144', 144", 144"' mit Reagenzien befüllt, während die Meßküvette 144 leer ist oder ebenfalls mit einem Reagenz befüllt sein kann. Der befüllte Systemreagenzienträger 102 ist in der bereits beschriebenen Weise mit einer Membran verschlossen, die beispielsweise aus einer auf die obere ebene Fläche des Rahmens 104 aufgebrachten Silikonschicht besteht.

Zumindest in seinem unteren, über die Küvetten 144', 144", 144"' hinausstehenden Bereich 145 ist die Meßküvette 144 so ausgebildet, daß sie dem Meßprinzip der Detektoreinrichtung 20 keinen oder nur einen vernachlässigbar geringen Meßwiderstand entgegenbringt, so daß zumindest in diesem Bereich der Meßküvette 144 ein Meßabschnitt ausgebildet ist.

Bei Verwendung des Systemreagenzienträgers 102 ist die Schrittweite des Schrittmotors des Reaktionsrotors und/oder der Hub-/Schwenkeinrichtung 18 so eingestellt, daß ein problemloses Anfahren der einzelnen Kammern oder Küvetten 144, 144', 144", 144"' durch die Pipettiervorrichtung 16 möglich ist.

Die Erfindung ist nicht auf die obigen Ausführungsbeispiele beschränkt, die lediglich der allgemeinen Erläuterung des Kerngedankens der Erfindung dienen. Im Rahmen des Schutzumfangs können die erfindungsgemäße Vorrichtung und auch die beschriebenen Arbeitsverfahren auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Analysesystem, insbesondere für die medizinische Analytik zur Durchführung klinisch-chemischer und immunologischer Analysen, umfassend
- ein Analysegerät (1) und
- zumindest einen Systemreagenzienträger (2; 102), wobei das Analysegerät (1) aufweist:
- erste Aufnahmevorrichtungen (32) für Systemreagenzienträger,
- zweite Aufnahmevorrichtungen (38) für Probengefäße (40),
- eine Pipettiervorrichtung (16),
- eine Detektoreinrichtung (20),
- eine Steuerungseinrichtung (22) und
- eine Lesevorrichtung (64) zum Lesen eines auf dem Systemreagenzienträger (2; 102) vorgesehenen ersten, maschinenlesbaren Identifikationscodes (68) für im Systemreagenzienträger (2; 102) enthaltene Reagenzien und eines auf dem Systemreagenzienträger (2; 102) vorgesehenen zweiten Identifikationscodes (70) für die Identifikation des Herstellers des Systemreagenzienträgers (2; 102), wobei die Lesevorrichtung (64) die Identifikationscodes (68, 70) ausliest und auswertet, um den Systemreagenzienträger (2; 102) mit den darin enthaltenen Reagenzien zu identifizieren und um ungeeignete Systemreagenzienträger von der Verwendung auszuschließen,
- wobei der Systemreagenzienträger (2; 102) zumindest eine mit einem testspezifischen, vorformulierten, naßchemischen Systemreagenz (45', 45") vorbefüllte Küvette (44', 44"; 144', 144", 144"') aufweist.

2. Analysesystem nach Anspruch 1,
**dadurch gekennzeichnet**
**daß** der Systemreagenzienträger eine Mehrzahl von nebeneinander angeordneten und miteinander verbundenen Küvetten (44, 44', 44"; 144, 144', 144", 144"') aufweist, wobei zumindest eine (44', 44"; 144', 144", 144"') der Küvetten (44, 44', 44"; 144, 144', 144", 144"') mit einem testspezifischen, vorformulierten, naßchemischen Systemreagenz (45', 45") vorbefüllt ist und wobei vorzugsweise an zwei gegenüberliegenden Seiten einer zentralen Meßküvette weitere Küvetten angeordnet sind, wobei die gegenüberliegenden Seiten bevorzugterweise die radial innere und die radial äußere Seite der in eine Aufnahmevorrichtung eingesetzten Meßküvette bezogen auf den Radius eines Reaktionsrotors (12) sind.

3. Analysesystem nach Anspruch 1 oder 2,
**dadurch gekennzeichnet**
**daß** die Detektoreinrichtung (20) einen fotometrischen Detektor aufweist.

4. Analysesystem nach Anspruch 1, 2 oder 3,
**dadurch gekennzeichnet,**
**daß** die zweiten Aufnahmevorrichtungen (38) für Probengefäße (40) von stationären Aufnahmen gebildet sind, die auf einer Kreisbahn (36) angeordnet sind, welche konzentrisch zur Schwenkbahn einer die Pipettiervorrichtung (16) aufnehmenden Hub-/Schwenkeinrichtung (18) gelegen ist.

5. Analysesystem nach Anspruch 1, 2 oder 3,
**dadurch gekennzeichnet,**
**daß** die zweiten Aufnahmevorrichtungen (38) für Probengefäße (40) auf einem gesteuert drehbar antreibbaren zweiten Rotor (86) vorgesehen sind, der ringförmig ausgebildet und konzentrisch zu einem gesteuert drehbar antreibbaren Reaktionsrotor (12) angeordnet ist, der die ersten Aufnahmevorrichtungen (32) für Systemreagenzienträger aufweist.

6. Analysesytem nach einem der vorhergehenden Ansprüche,
**dadurch gekennzeichnet,**
**daß** die zweiten Aufnahmevorrichtungen (38) für Probengefäße (40) sowie die Steuerungseinrichtung (22) so ausgestaltet sind, daß Reagenzienbehälter (41) in die zweiten Aufnahmevorrichtungen (38) einsetzbar sind.

7. Analysesystem nach Anspruch 6,
**dadurch gekennzeichnet,**
**daß** Reagenzienbehälter (41) vorgesehen sind, die zu den Probengefäßen (40) im wesentlichen kompatibel sind, um ebenfalls von den zweiten Aufnahmevorrichtungen (38) aufgenommen werden zu können.

8. Analysesystem nach einem der vorhergehenden Ansprüche,
**dadurch gekennzeichnet,**
**daß** eine Wascheinrichtung (72) zur Reinigung der Meßküvetten (44, 44', 44"; 144) vorgesehen ist.

9. Analysesystem nach einem der vorhergehenden Ansprüche,
**dadurch gekennzeichnet,**
**daß** das Analysegerät (1) eine Bound/Free-Trennungsstation (76) aufweist.

10. Analysesystem nach Anspruch 9,
**dadurch gekennzeichnet,**
**daß** die Detektoreinrichtung (20) einen Fotomultiplier für Chemilumineszenz-Messung aufweist.

11. Analysesystem nach einem der vorhergehenden Ansprüche,
**dadurch gekennzeichnet,**
**daß** eine Auswerteeinheit (23) vorgesehen ist, die die von der Detektoreinrichtung (20) ermittelten Daten unter Verwendung von in einer Speichereinrichtung (23') gespeicherten Referenzdaten auswertet.

12. Analysesystem nach Anspruch 11,
**dadurch gekennzeichnet,**
**daß** eine Anzeigeeinrichtung (82) zur Anzeige der von der Auswerteeinrichtung (23) gelieferten Ergebnisse vorgesehen ist.

13. Analysesystem nach Anspruch 11 oder 12,
**dadurch gekennzeichnet,**
**daß** eine Druckereinrichtung (84) zum Ausdrucken der von der Auswerteeinrichtung (23) gelieferten Ergebnisse vorgesehen ist.

14. Analysesystem nach einem der vorhergehenden Ansprüche,
**dadurch gekennzeichnet,**
**daß** die Küvetten (44, 44', 44"; 144, 144', 144", 144"') jeweils mit einer durchstechbaren Membran (47) verschlossen sind.

15. Analysesystem nach einem der vorhergehenden Ansprüche,
**dadurch gekennzeichnet,**
**daß** die Küvetten (44, 44', 44") eines Systemreagenzienträgers (2) jeweils über Sollbruchstellen (45) miteinander verbunden sind.

16. Analysegerät, insbesondere für ein Analysesystem gemäß einem der vorhergehenden Ansprüche, mit
- ersten Aufnahmevorrichtungen (32) für Systemreagenzienträger,
- zweiten Aufnahmevorrichtungen (38) für Probengefäße (40),
- einer Pipettiervorrichtung (16),
- einer Detektoreinrichtung (20) und
- einer Steuerungseinrichtung (22),
**dadurch gekennzeichnet,**
- **da**ß das Analysegerät (1) eine Lesevorrichtung (64) für einen auf dem Systemreagenzienträger (2; 102) vorgesehenen ersten, maschinenlesbaren Identifikationscode (68) für im Systemreagenzienträger (2; 102) enthaltene Reagenzien und einen auf dem Systemreagenzienträger (2; 102) vorgesehenen zweiten Identifikationscode (70) für die Identifikation des Herstellers des Systemreagenzienträgers (2; 102) aufweist, wobei die Lesevorrichtung (64) die Identifikationscodes (68, 70) ausliest und auswertet, um den Systemreagenzienträger (2; 102) mit den darin enthaltenen Reagenzien zu identifizieren und um ungeeignete Systemreagenzienträger von der Verwendung auszuschließen.

17. Analysegerät nach Anspruch 16,
**dadurch gekennzeichnet,**
**daß** die Detektoreinrichtung (20) einen fotometrischen Detektor aufweist.

18. Analysegerät nach Anspruch 16 oder 17,
**dadurch gekennzeichnet,**
**daß** die zweiten Aufnahmevorrichtungen (38) von stationären Aufnahmen gebildet sind, die auf einer Kreisbahn (36) angeordnet sind, welche konzentrisch zur Schwenkbahn einer die Pipettiervorrichtung (16) aufnehmenden Hub-/Schwenkeinrichtung (18) gelegen ist.

19. Analysegerät nach Anspruch 16 oder 17,
**dadurch gekennzeichnet,**
**daß** die zweiten Aufnahmevorrichtungen (38) auf einem gesteuert drehbar antreibbaren zweiten Rotor (86) vorgesehen sind, der ringförmig ausgebildet und konzentrisch zu einem gesteuert drehbar antreibbaren Reaktionsrotor (12) angeordnet ist, der die ersten Aufnahmevorrichtungen (32) für Systemreagenzienträger aufweist.

20. Analysegerät nach einem der Ansprüche 16 bis 19,
**dadurch gekennzeichnet,**
**daß** die zweiten Aufnahmevorrichtungen (38) sowie die Steuerungseinrichtung (22) so eingerichtet sind, daß Reagenzienbehälter (41) in die zweiten Aufnahmevorrichtung (38) einsetzbar sind.

21. Analysegerät nach einem der Ansprüche 16 bis 20,
**dadurch gekennzeichnet,**
**daß** eine Wascheinrichtung (72) zur Reinigung der Meßküvetten (44, 44', 44"; 144) vorgesehen ist.

22. Analysegerät nach einem der Ansprüche 16 bis 21,
**dadurch gekennzeichnet,**
**daß** das Analysegerät (1) eine Bound/Free-Trennungsstation (76) aufweist.

23. Analysegerät nach Anspruch 22,
**dadurch gekennzeichnet**
**daß** die Detektoreinrichtung (20) einen Fotomultiplier für Chemilumineszenz-Messung aufweist.

24. Analysegerät nach einem der Ansprüche 16 bis 23,
**dadurch gekennzeichnet,**
**daß** eine Auswerteeinheit (23) vorgesehen ist, die die von der Detektoreinrichtung (20) ermittelten Daten unter Verwendung von in einer Speichereinrichtung (23') gespeicherten Referenzdaten auswertet.

25. Analysegerät nach Anspruch 24,
**dadurch gekennzeichnet,**
**daß** eine Anzeigeeinrichtung (82) zur Anzeige der von der Auswerteeinrichtung (23) gelieferten Ergebnisse vorgesehen ist.

26. Analysegerät nach Anspruch 24 oder 25,
**dadurch gekennzeichnet,**
**daß** eine Druckereinrichtung (84) zum Ausdrucken der von der Auswerteeinrichtung (23) gelieferten Ergebnisse vorgesehen ist.

27. Systemreagenzienträger (2; 102), insbesondere für ein Analysesystem gemäß einem der Ansprüche 1 bis 17, mit
- zumindest einer mit einem testspezifischen, vorformulierten, naßchemischen Systemreagenz (45', 45") vorbefüllten Küvette (44, 44', 44"; 144, 144', 144", 144"') und
- einem maschinenlesbaren Identifikationscode (68) für im Systemreagenzienträger (2; 102) enthaltene Reagenzien,
**dadurch gekennzeichnet,**
- **da**ß der Systemreagenzienträger (2; 102) mit einem Identifikationscode (70) für die Identifikation des Herstellers des Systemreagenzienträgers (2; 102) versehen ist.

28. Systemreagenzienträger nach Anspruch 27,
**dadurch gekennzeichnet,**
- **daß** eine Mehrzahl von nebeneinander angeordneten und miteinander verbundenen Küvetten (44, 44', 44"; 144, 144', 144", 144"') vorgesehen ist, wobei zumindest eine (44', 44"; 144', 144", 144"') der Küvetten (44, 44',44"; 144, 144', 144", 144"') mit einem testspezifischen, vorformulierten, naßchemischen Systemreagenz (45', 45") vorbefüllt ist.

29. Systemreagenzienträger nach Anspruch 27 oder 28,
**dadurch gekennzeichnet**
- **da**ß eine zentrale Küvette (144) vorgesehen ist, die als Meßküvette ausgebildet ist und
- daß zumindest an einer Seite der zentralen Küvette (144), deren oberer Öffnung benachbart, zumindest eine weitere Küvette (144', 144", 144"') im Systemreagenzienträger (102) vorgesehen ist, die einen Aufnahmeraum für ein Systemreagenz bildet,
- wobei die zentrale Küvette (144) und die weitere (n) Küvette (n) (144' 144", 144"') eine Küvettenanordnung bilden.

30. Systemreagenzienträger nach Anspruch 29,
**dadurch gekennzeichnet,**
**daß** an zwei gegenüberliegenden Seiten der Meßküvette (144) jeweils zumindest eine weitere Küvette (144', 144", 144"') für die Aufnahme von Systemreagenzien vorgesehen ist.

31. Systemreagenzienträger nach Anspruch 29 oder 30,
**dadurch gekennzeichnet**
- **da**ß die Meßküvette (144) in ihrer Längsausdehnung über die Längsausdehnung der weiteren Küvetten (144', 144", 144"'), vorzugsweise vertikal nach unten, hervorsteht und
- daß vorzugsweise im hervorstehenden Bereich (145) der Meßküvette (144) ein Meßabschnitt gebildet ist.

32. Systemreagenzienträger nach einem der Ansprüche 27 bis 31,
**dadurch gekennzeichnet,**
**daß** die Küvetten (44, 44', 44"; 144, 144', 144", 144"') jeweils mit einer durchstechbaren Membran (47) verschlossen sind.

33. Systemreagenzienträger nach einem der Ansprüche 27 bis 32,
**dadurch gekennzeichnet,**
**daß** eine Mehrzahl von Küvetten (44, 44', 44") oder von Küvettenanordnungen jeweils über Sollbruchstellen (45) miteinander verbunden sind.
